Europäisches Patentamt

(19) European Patent Office

Office européen des brevets

(11) EP 0 762 835 B1

(12) EUROPEAN PATENT SPECIFICATION

(45) Date of publication and mention
of the grant of the patent:
**23.12.1998 Bulletin 1998/52**

(51) Int. Cl.$^6$: **A23L 1/214**, A23L 1/308,
A23L 1/236, C13F 3/00,
C13C 1/06

(21) Application number: **95912343.1**

(22) Date of filing: **23.03.1995**

(86) International application number:
**PCT/GB95/00656**

(87) International publication number:
**WO 95/25440 (28.09.1995 Gazette 1995/41)**

(54) **PALATABLE COMPOSITIONS COMPRISING SUGAR BEET FIBRE**

ZUCKERRÜBEFASERN-ENTHALTENDE WOHLSCHMECKENDE ZUSAMMENSETZUNGEN

COMPOSITIONS DE GOUT AGREABLE A BASE DE FIBRES INSOLUBLES DE BETTERAVE
SUCRIERE

(84) Designated Contracting States:
**AT BE CH DE DK ES FR GB GR IE IT LI LU NL PT
SE**

(30) Priority: **24.03.1994 GB 9405888**

(43) Date of publication of application:
**19.03.1997 Bulletin 1997/12**

(73) Proprietor: **BRITISH SUGAR PLC
Peterborough PE2 9QU (GB)**

(72) Inventors:
• **WILLIAMS, Edward, Lloyd
Norwich Norfolk NR5 0TW (GB)**
• **COZENS, Andrew, John
Norwich Norfolk NR12 8QN (GB)**
• **GAY, Michael, Robert
Norwich Norfolk NR2 3UT (GB)**
• **SMITH, Kevin, Stephen
Norwich Norfolk NR8 5BX (GB)**

• **THEOBALD, Trevor, Charles
East Dereham Norfolk NR19 1EQ (GB)**
• **COLE, John
Peakirk Peterborough PE6 7NF (GB)**

(74) Representative:
**Hallybone, Huw George et al
CARPMAELS AND RANSFORD
43 Bloomsbury Square
London WC1A 2RA (GB)**

(56) References cited:
**EP-A- 0 474 073         WO-A-87/06798
WO-A-87/06799         WO-A-91/03173
FR-A- 399 141           FR-A- 929 658
US-A- 4 770 883         US-A- 4 882 190
US-A- 5 213 836**

• **DATABASE WPI Section Ch, Week 8320 Derwent
Publications Ltd., London, GB; Class D13, AN
82-48424K & JP,A,56 096 658 (NIPPON TENSAI
SEITO) , 4 August 1981 cited in the application**

## Description

This invention relates to palatable, sweet, compositions comprising sugar beet fibre. The invention also relates to a method for preparing palatable sugar beet fibre and to uses of the compositions.

An increase in dietary fibre intake has been recommended for the U.K. population. Over recent years, the proportion of soluble fibre has decreased in the population diet, whilst the insoluble fibre proportion has increased.

Various suggestions have been made to introduce dietary fibre into the diet of humans, but none has found widespread acceptance.

One source of fibre is the sugar beet. The principal use of sugar beet fibre is currently in animal feedstuffs. Sugar beet has a characteristic earthy "off" taste which makes it unpalatable to humans and therefore it cannot be used as human food.

Sugar beet fibre contains a mixture of polysaccharides principally cellulose, pectins and hemicelluloses. It is these polysaccharides which constitute the main components of dietary fibre. The Englyst method of analysis distinguishes between the different components of dietary fibre. For the purposes of the present specification, cellulose and lignin will be referred to as "insoluble fibre" and non-cellulosic polysaccharides as "soluble fibre".

Whole diced sugar beet is used in pickles where the characteristic undesirable taste of the beet is masked completely by the other ingredients.

Commercial preparations of processed dietary fibre from, sugar beet pulp are known. The product sold as Fibrex™ by a subsidiary of the Swedish Sugar Company is an example of such a preparation. Another example is the product sold as Duofiber™ by the American Crystal Sugar Company. These preparations suffer from the limited acceptance of pure fibre products and have low palatability. The present applicant sells a whole beet fibre product as Beta-Fibre™, which has been successful in the health food market. All these products are rendered palatable by substantial fractionation of the sugar beet and, in particular, contain little or no sugar. As a result, these products do not taste sweet.

Sugar beet which has a large number of cut surfaces rapidly goes from an off-white colour to a black colour. This has, in the past, been attributed to the action of enzymes, such as polyphenoloxidase. High temperatures are able to inactivate enzymes. The rapid achievement of these temperatures thus prevents the colour deteriorating too much and aids in the preservation of the material.

Japanese laid-open patent specification 56-96658 describes a process for the production of edible fibre from sugar beet which involves taking whole fresh sugar beet, cutting the beet into cosettes, subjecting the cosettes to a conventional sugar extraction step, subjecting the beet to a water blanching heat treatment under conditions of 85°C or more for 30 seconds or more, dewatering the blanched cosettes by pressing, followed by drying the blanched, pressed cosettes and milling to produce a dry, milled product. The product is carefully sieved, and the fraction below 150 mesh size is collected. Larger particles are alleged to contribute less desirable organoleptic properties. The product is a white powder that can be added to food materials such as flour to improve water retention properties with minimal effect on the flavour of the food materials. The sugar content of the dried, milled product is generally low, since substantial amounts of sugar are lost from the cosettes in the sugar extraction, blanching and pressing steps. Optionally, the cosettes pass through an incomplete sugar extraction step with the result that the final dried blanched product contains 1-10% w/w of sugar.

US-A-5112638 describes a process for preparing a sugar beet fibre product having improved flavour and odour. The starting material for the process is sugar beet pulp from which the sugar has been extracted in the usual fashion. The pulp is formed into an aqueous slurry and heat treated at a temperature above 70°C, preferably about 75°C, followed by dewatering, drying and milling. The resulting material comprises 75% w/w or more of dietary fibre and is characterised by reduced "wet earthy" and "wet rancid" flavour notes in comparison with untreated sugar beet pulp.

EP-A-0474073 describes a porridge-like dietary fibre obtained by removing most of the water-soluble components, such as sugar, from sugar beet roots to form wet beet pulp, followed by subjecting the pulp to grinding to form finely ground fibre associated with water. The porridge-like material is alleged to have better mouth-feel and less disagreeable odour than conventional sugar-beet fibre.

Published International patent application WO 89/04120 describes a method for making a sugar beet chip/snack which involves cleaning and slicing sugar beet, immersing the slices in water at a temperature of about 71 to 82°C for about 15 to 30 minutes, to remove a substantial portion of the sugar and oxalic acid from the beet to produce bland blanched slices, frying the slices at about 171 to 198°C until crisp and then drying the pieces. In an alternative described process, cleaned and sliced sugar beet is immersed in water at about 66 to 82°C to remove a substantial portion of the sugar and oxalic acid from the beet and then milled and extruded to produce a crisp snack product.

United States patent specification no. 4770883 describes a process for the production of a dehydrated foodstuff and, in one embodiment, a natural sweetener from sugar beet. The process aims to prevent bacterial contamination during processing by shredding the sugar beet with a heated knife and then immediately drying the shreds in a standard commercial dehydrator. Heating the knife ensures that bacteria do not collect and grow on the knife blade. The need for a heated knife is reduced if the sugar beets are cold or frozen as enzyme activity at these temperatures is reduced. The process is said to limit bacterial and enzyme action, thus producing a more neutral or natural flavour and allowing its use for the production of other dried fruits and vegetables, such as dried apples bananas and the like. The specification does not address the unpleasant earthy flavour inherent in sugar beet which is though to be unconnected with bacterial contamination or enzyme action.

As can be seen from the brief review given above, the main concern of sugar beet fibre technology hitherto has been to find applications of spent sugar beet pulp from which the sugar has been extracted, by overcoming the problems of off-colour, off-flavour and off-odour of the sugar beet pulp.

WO87/06799 describes a method of preparing a dry, edible sugar beet material by cutting whole peeled sugar beet into slices not exceeding 5mm, followed by steam drying the whole sugar beet pieces with superheated steam at 150°C. The product is crisp, brownish, and has a long shelf life. WO87/06788 describes a similar process including the step of pressing the sugar beet to lower the sugar content of the dried material.

It has now been found that processing whole sugar beet according to a novel process that minimises sugar extraction results in a novel, high-fibre whole sugar beet product having a pleasant appearance, smell and mouth-feel and a surprising malty taste in addition to the sweet taste that is due to the high sugar content of the product. The novel product is a multi-functional ingredient suitable for use as a sweetener, bulk filler, dietary fibre additive and malt flavouring. It can provide texture, water binding, sweetness, bulk, increased fibre content, colour and/or flavour in a variety of foodstuffs. The novel product can be used to replace sugar or other sweeteners in food product formulations. The novel product has good water binding properties, holding about 6 to 8 times it own weight of water. This enables it to be used to hold shape or control texture in many food products by imparting structure.

Moreover, the novel product is especially suitable for use in the preparation of cooker extruded foodstuffs because it tends to reduce the sensitivity of the manufacturing process towards process variables such as machine torque, resulting in greater product uniformity.

The present invention provides a process to prepare a palatable composition comprising sugar beet material and consisting essentially of sugar and non-starch polysaccharides, said process comprising the steps of:

(a) chopping raw sugar beet to produce raw sugar beet pieces; immediately followed by
(b) blanching the raw sugar beet pieces in steam or hot water at a temperature of at least 87°C, followed by
(c) drying the blanched sugar beet pieces in hot air.

Preferably, the above steps result in dried blanched sugar beet pieces containing at least 40% w/w of sugar, more preferably at least 50% w/w of sugar, and most preferably at least 60% w/w of sugar. The sugar content is determined by macerating a sample with a lead acetate solution, followed by filtration and determination of the amount of dissolved sugar in the filtrate by standard optical polarisation measurements.

The high sugar content is responsible for the development of pleasant colour and flavour notes in the dried blanched product, and contributes to other desirable properties. Moreover, the high sugar content allows the product to be used directly as a replacement for sucrose or other sweeteners in the preparation of foodstuffs. Processes for the preparation of dried blanched sugar beet products having such a high sugar content are new, and the benefits of the high sugar content in the form of novel flavour notes and process enhancement have not previously been made available to the public.

In this context the term "sugar beet" includes all plants of the species *beta vulgaris*. The sugar beet is topped to remove green vegetable matter and the crown of the beet and washed to remove soil prior to step (a). Preferably, the sugar beet is further washed with high pressure water jets and/or peeled in order to minimise the amount of soil entering the process.

The sugar beet is then chopped into raw sugar beet pieces. The raw sugar beet pieces may be cosettes (thin strips) similar to those from which sugar is conventionally extracted. Alternatively, the sugar beet may be sliced or diced. Preferably, the raw sugar beet is diced to produce diced raw sugar beet pieces. The pieces are preferably as near cubic in shape as possible, although they may be irregularly shaped. For the diced pieces, the median ratio of the maximum diameter to the minimum diameter of each piece is preferably less than 5:1, more preferably less than 3:1 and most preferably less than 2:1. This results in a relatively low ratio of surface area to volume for the pieces. The low ratio of surface area to volume is advantageous because it reduces sugar loss during the blanching step (b) and assists in optimising the drying step (c).

The raw sugar beet pieces are then immediately blanched in steam or hot water. The term "immediately" signifies that no intermediate sugar extraction step is performed on the sugar beet pieces. Preferably, the raw sugar beet pieces enter the blanching apparatus within 30 seconds, more preferably within 10 seconds, of the chopping step in order to minimise discoloration of the cut sugar beet surfaces by enzymic action.

The blanching step is carried out for a time, and at a temperature, sufficient to inactivate the enzymes that cause discoloration of sugar beet and the development of undesirable flavours and odours. Enzymic deactivation takes place at temperatures of 87°C and above. Therefore, the sugar beet pieces in the blanching step must reach a core temperature of at least 87°C for a length of time sufficient to inactivate the enzymes. In practice, maintaining a temperature of 90-100°C for 2-10 minutes is preferred. Higher temperatures and/or longer blanching times tend to result in undesirable sugar extraction and excessive softening of the sugar beet pieces.

Preferably, blanching is carried out in a screw blancher: A belt blancher may also be used. Preferably, blanching is carried out using steam rather than hot water. This is because the use of steam minimises sugar extraction during the blanching step and generates less effluent. Preferably, steam at 105°C is used and the steam blancher is operated at atmospheric pressure.

The blanched sugar beet pieces obtained in step (b) are substantially colourless, stable in air without discoloration, and still contain substantially all of the sugar present in the original sugar beet. Preferably, no more than 20% of the sugar present in the original sugar beet is extracted in the blanching step.

The blanched sugar beet pieces are drained of surface water and they may be further chopped or homogenised, but they are preferably not pressed to lower their moisture content. Pressing tends to result in undesirable loss of sugar. Pressing also tends to degrade the structure of the sugar beet pieces by compressing them into a dense mass that is difficult to dry to a uniform product. The absence of an intermediate pressing step is a further difference between the preferred processes of the present invention and previously known processes for sugar beet fibre processing.

The blanched sugar beet pieces are then dried. The drying may, for example, be carried out in a belt dryer, in which a bed of the blanched sugar beet pieces rests on a foraminous belt and is dried by a flow of hot air.

Alternatively, the sugar beet pieces can be dried by roller drum drying. In drum drying the pieces are coated onto a steam heated revolving drum. The temperature employed is suitably greater than 100°C, typically 108-110°C. The temperature should not exceed 130°C. Variables in this stage are: drum temperature, drum speed and feed rate. These should be adjusted to give the required throughput at a product dry matter of greater than about 90% (w/w) dry matter and typically about 93% (w/w).

The heat applied in the drying step, together with the presence of high levels of sugar in the blanched sugar beet pieces, results in a gradual curing or cooking of the sugar beet as it dries. This curing process results in the development of a tan colour and a malty flavour note in the dried blanched sugar beet pieces. Preferably, the drying conditions are selected so as to provide a uniform colour and flavour change throughout the dried sugar beet product. Generally speaking, the colour and flavour of the dried product are intensified by higher drying temperatures and a longer residence time in the dryer. However, if the temperature is too high, then the blanched dried sugar beet product is non-uniform. The high water content of unpressed blanched sugar beet pieces requires a relatively long drying time to remove, and hence results in a product with high colour and strong malty flavour notes. A further advantage of the unpressed blanched pieces is that they can be dried to produce an extremely uniform product.

The final dry matter content of the dried blanched sugar beet pieces is 90% or more, preferably 95% w/w or more. The final sugar content of the dried blanched sugar beet pieces is 40% to 80% w/w, preferably 60% to 75% w/w. The balance of the dried blanched sugar beet pieces consists essentially of non-starch polysaccharides, also known as dietary fibre.

The dried blanched sugar beet pieces are preferably cooled to below 40°C to set the sugar, thereby allowing the pieces to be milled more easily. The pieces are then preferably milled to a powder. The preferred powder is a coarse powder having 90% of the particles in the size range less than 425 µm and 65% of the particles in the size range greater than 75µm. other particle size ranges may be advantageous in certain applications. The powder is preferably mixed with up to 2% w/w of vegetable oil to prevent caking during storage.

The present invention also provides a palatable sugar beet material obtainable by the above process.

The present invention further provides a palatable sugar beet material consisting essentially of sugar and non-starch polysaccharides, said material comprising from 40% to 80% w/w sugar and having a malty taste. Typically, the material also exhibits a stable light brown or tan colour. This material is preferably obtained by a process according to the present invention. Preferably, this material comprises from 60% to 75% w/w of sugar.

The palatable sugar beet materials according to the present invention will also comprise minor amounts of other naturally occurring sugar beet constituents. These include proteins and lignin. Trace levels of other constituents will also be present.

Palatable dried blanched sugar beet materials of the invention typically have the following composition:

| Sucrose: | 60% to 75% |
|---|---|
| Non-starch polysaccharides comprising | 14 to 18% |
| Cellulose: | 3.5 to 5% |
| Non-cellulose polysaccharides: | |
| Insoluble: | 5% to 6% |
| Soluble: | 5.5 to 7% |
| Water: | 4 to 10% |
| Total Nitrogen as protein: | 4% to 5% |
| Total ash: | 2.25% |
| (all percentages expressed by total weight) | |

The material of the invention is high in soluble and insoluble beet dietary fibres which have been shown to be lower blood cholesterol levels with attendant health advantages.

Significantly, the composition is a natural product rich in sugar and has legion applications in the foodstuffs industry. In particular, the materials of the invention containing both "insoluble fibre" and "soluble fibre" can be used as sweeteners and bulking agents in a wide variety of applications, for example in cereals, confectionery, granola bars, bakery goods, savory fillings, snacks and preserves. The materials of the invention may be used as means to supplement the fibre content of foods, or as a substitute for sugar which may differ from sucrose in perceived sweetness, or as carriers for flavours etc. When the materials of the present invention are used in conjunction with glucose syrups there can be a synergistic effect of increasing sweetness. That is to say, the perceived total sweetness can be greater than the sum of the sweetness of the glucose syrup and of the sugar in the material of the present invention taken alone. This can be used to enhance the flavour profile of foodstuffs and beverages.

An outstanding and entirely novel feature of the materials according to the present invention is their malty taste. The malty flavour notes develop during the drying of blanched sugar beet pieces containing high levels of sugar. The malty flavour notes render the materials of the present invention especially suitable for addition to breakfast cereals, certain cakes and breads, and as a substitute for malt products in these and many other foodstuffs and beverages. This malty flavour is extremely heat-stable at temperatures up to 150°C, or on prolonged boiling. Likewise, the malty flavour is unaffected by pressures up to 10 MPa, or by processing under high shear conditions. No flavour fade is detectable in products stored for up to twelve months. This stability allows the product to be utilised under most of the conditions used for food processing, including cooker extrusion. The malty flavour of the dried blanched sugar beet material according to the present invention can simplify the manufacture of some foodstuffs. For example, it makes it unnecessary to toast certain breakfast cereal formulations in order to develop flavour and colour.

It is believed that the malty flavour of the materials according to the present invention will be instantly apparent to essentially every person who tastes them. Some variation in the overall flavour profile of the materials according to the present invention can take place whilst maintaining the malty taste. However, preferably, the materials have a sensory profile (as described further below) substantially the same as that of a product of the process according to the present invention.

A further advantageous feature of the dried blanched whole sugar beet according to the present invention is that it has good water binding properties, holding about 6 to 8 times its own weight of water (based on the measured increase in volume of a sample of the sugar beet composition when water is added thereto). This enables it to be used to hold shape or control texture in many food products. There are many potential applications: e.g. to adjust texture and give crisper bite to breakfast cereals and snack products, to control flow of biscuits during baking, to prevent "cold flow" in caramels and other confectionery, to act as a viscosity controller in sauces, pickles and other high moisture products, to hold shape of ice cream, to inhibit moisture migration in multi-texture products when incorporated into the higher moisture part and thus increase shelf life, and to produce toffees of normal hardness at higher moisture content and hence lower ingredient cost.

Furthermore, the water binding properties enable the sugar beet material to be used as a thickener, for example in soups, sauces, or hot beverages.

Specific embodiments of the process and product according to the present invention will now be described further, by way of example, with reference to the accompanying drawings, in which:-

Figure 1 is a flow chart of steps in the process of the present invention as described in Example 1;

Figure 2 is a sensory profile of a product obtained by the process shown schematically in Figure 1.

Example 1 Preparation of Dried Blanched Sugar Beet Compositions

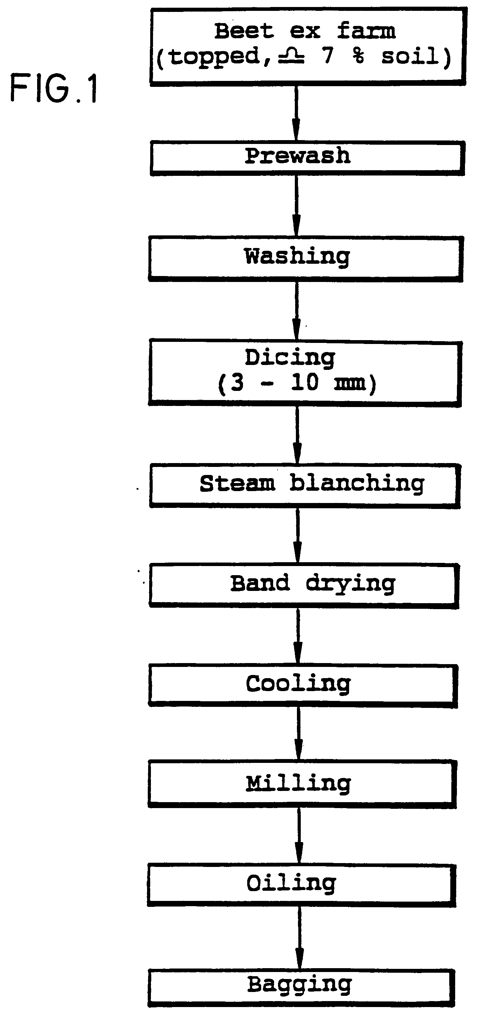

Referring to Figure 1, this embodiment of the process according to the present invention uses as its starting material sugar beet that has been topped to remove foliage (and the beet crown) following harvesting, but otherwise is unwashed and unprocessed. The sugar beet is selected from sugar beet grown in particular soil types, preferably soil types having small soil particle sizes, so as to minimise any gritty mouth-feel caused by soil particles carried through into the final product. The as-delivered sugar beet comprises about 7% w/w of soil. The as-delivered sugar beet undergoes a pre-wash in a conventional beet washer. The beet is then washed in a high-pressure washer, which removes substantially all dirt and some skin from the sugar beet.

The washed sugar beet is diced into 5 mm cubes, which are then immediately (within ten seconds) transferred to a steam screw-blancher. Blanching is carried out using steam at 105°C and atmospheric pressure in an amount sufficient to heat the diced sugar beet to 95°C for four minutes. The blanched sugar beet pieces are then transferred, without cooling or pressing, to a band drier.

The band drier comprises a perforated belt with a bed of the diced, blanched sugar beet pieces thereupon. Hot air is blown through the band drier. During the drying process, the blanched sugar beet pieces develop a uniform tan colour and malty flavour notes. It is found that the intensity of the flavour of the product correlates to the intensity of the tan colour. Both parameters correlate to the temperature and duration of the drying step.

Following the drying step, the dried sugar beet pieces are passed under a cool air blower for a few minutes to cool and set the sugar in the dried blanched pieces.

The cooled, dried blanched sugar beet pieces are then milled to a coarse powder, wherein 90% of the particles are in the size range below 425 micrometers and 65% of the particles are in the size range above 75 micrometers. This particle size range is selected to minimise caking and optimise the organoleptic properties of the powder. Other particle size ranges may be advantageous in certain applications. The powder is oiled with 1% w/w of vegetable oil to help prevent caking. Vegetable oil has been found to be better for this purpose than other known dry anti-caking agents. oiling has also been found to improve the organoleptic properties of the powder.

The product is a substantially uniform powder having a light brown or tan colour. The powder comprises about 70% by weight of sugar. The remainder of the powder is mainly non-starch polysaccharide. The powder tastes sweet, with a pronounced malty flavour note.

Example 2 Alternative Preparation of Dried Blanched Sugar Beet Product

14.83 kg of topped beet similar to that used in Example 1 is fed into the abrasion peeler (Crypto Peerless™ Model C56F) which is fed with a water flow of 251/min. The beet iss given a two minute residence time in the peeler and the yield at this point is 11.19 kg of peeled beet, a loss of 24.5% w/w. The peeled beet at this stage is cream in colour.

The peeled beet is shredded in a Hallde™ Type RG6 shredder fitted with a 4.5mm blade to give shreds with typical dimensions of 2.3 x 4.5mm cross sectionally with a variable length.

The shreds are then transferred immediately to perforated metal trays to a bed depth of 20mm and these are heated in steam at 105°C for a total time, including build up, of 5 minutes. The yield of shreds after this point is 10.6 kg.

The stable shreds are then chopped in a Hobart Model VCM 25™ mill, 51 litres of water are added to facilitate easier processing and, the shreds are then homogenised with a Silverson Model EX™ high shear mixer fitted with a square hole high shear screen. The homogenised beet has a maximum particle size of 1,800μm and a mean particle size of 1,060μm.

The homogenised material is then fed onto a roller drum drier with a steam heated revolving drum (temperature typically 108-110°C). The speed of the drum is adjusted to give a dry product, typically 93% dry matter, of off-white colour, sweet tasting and in a sheet form. The product is then milled as described in Example 1.

Example 3 Evaluation of Sensory Profile

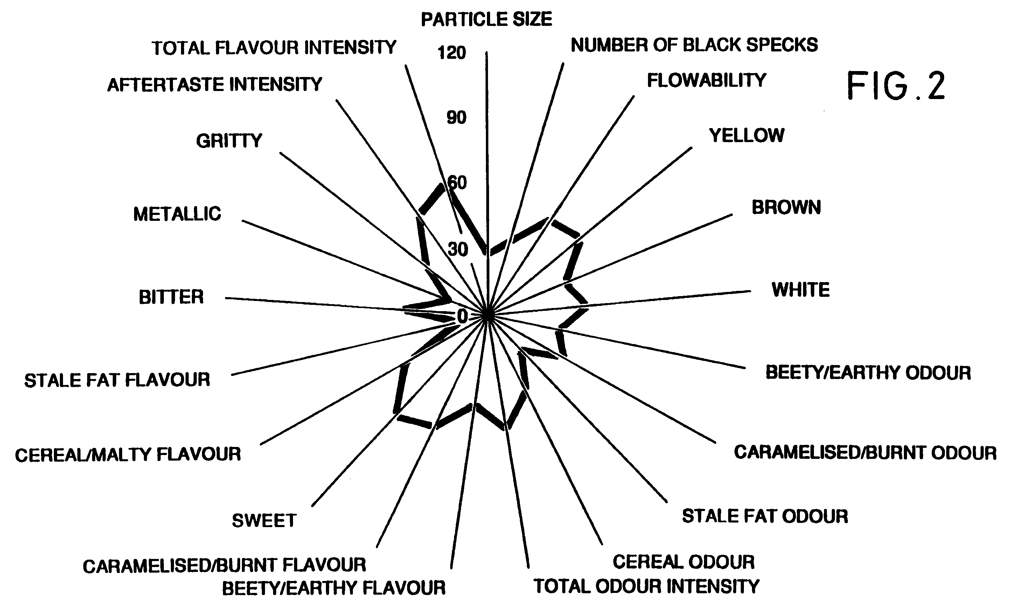

The flavour and other characteristics of the product obtained by the process of Example 1 are evaluated by drawing up a sensory profile shown in Figure 2. The sensory profile of Figure 2 was evaluated as follows.

Twelve panellists were chosen to participate in accordance with their acuity in recognising basic tastes. Over several sessions, the panellists were presented with samples of the product prepared as above and asked to write down individually all the words they could think of to describe the appearance, odour and flavour of the product (appearance and odour were judged on the dry product, whereas flavour was measured on a 25% w/w paste of the product in mineral water). The number of times each specific word or description was used was tallied, and a group discussion followed as to the definition of each descriptor used. It was decided to use only the descriptors that at least 50% of the panel agreed, after discussion, were relevant to the product. In following sessions, physical references for each of the descriptors at either a "not very" or "very" level (i.e., < 175 microns for "not very" large particle size) were presented to the panellists (where possible). This was done to ensure that all panellists had the same definition and comparable perception of intensity of each of the descriptors with respect to standard samples.

One session was held in which panellists were shown how to use the measuring scale used in determining the profile (see below). Thereafter, eight of the trained panellists participated in the determination of the sensory profile of the product. Each panellist rated the sample for the descriptors; Particle size, Number of Black Specks, Flowability, Yellow, Brown, White, Beety/Earthy Odour, Caramelised/Burnt Odour, Stale Fat odour, Cereal Odour, Overall Odour Intensity, Beety/Earthy Flavour, Caramelised/Burnt Flavour, Sweet, Cereal/Malty Flavour, Bitter, Metallic Flavour, Stale Fat Flavour, Gritty, Aftertaste Intensity, and Total Flavour Intensity; by placing, in accordance with the intensity they perceived in the sample, a vertical mark on a 121 mm horizontal line scale, anchored with the words "not very" at 10 mm and "very" at 111 mm. In each of the three categories, appearance, odour, and flavour, an "Other" category was available for panellists to use their own descriptors. Suggested word for these "Other" categories were also given. These were: Homogeneity of Colour and Presence of Lumps for appearance; Malty, Metallic, Mouldy and Rancid for odour; and, Rancid, Astringent, and Sour for flavour. Appearance and odour of the sample was judged using 20 g of dry sample in a randomly coded 120 ml glass jar with lid, whereas flavour was judged by tasting 20 g of a 25% w/w paste in mineral water, which was served in a white plastic randomly coded cup with a plastic spoon. Panellists were given mineral water to rinse with between samples.

The mean score for the product for each descriptor over the panellists was determined. The "spider plot" shown in Figure 2 was created by plotting the mean intensity of each descriptor at a distance representing its mean value, radiating from the centre of point of a graph, with each descriptor being at equal angles from each other.

Example 4: Use of the Dried Blanched Sugar Beet in the Preparation of Foodstuffs

A. Preparation of an Extruded Bran Stick breakfast cereal.

An extruded bran stick breakfast cereal is prepared according to the following formulation, by weight:

| Fine Wheat Bran | 77.0% |
|---|---|
| Wheat Four | 5.0% |
| Sugar Beet Composition | 18.0% |

The sugar beet composition is the material obtained by the process of Example 1. The formulation is processed in an APV MPF 50/15 extruder using the following conditions:

i) Temperature Profile of Extruder Barrel

| Zone 2 | 30°C |
|---|---|
| Zone 3 | 50°C |
| Zone 4 | 90°C |
| Zone 5 | 105°C |
| Zone 6 | 120°C |
| (Zone 6 is nearest the die face) | |

ii) Screw Configuration

| (Feed End) | |
|---|---|
| 3D | Feed Screw |
| 7 x 45°F | Forward Paddles |
| 2D | Feed Screw |
| 2 x 90°F | Forward Paddles |
| 4D | Single Lead Screw |
| 4 x 90°F | Forward Paddles |
| 5 x 45°R | Reverse Paddles |
| 1D | Single Lead Screw |
| (Die End) | |

The screw speed is 350 rpm, the powder feed rate is 18.6 kg/hr, the water flow rate is 32.2 g/min, the oil/lecithin (lubricant) flow rate is 0.5 g/min and the mixture is extruded through a 2 mm diameter die.

The resulting bran sticks have a pleasant sweet and malty taste and a crisp, uniform eating structure. They can be consumed, for example, as a high-fibre breakfast cereal. The high temperature and pressure of the extrusion step do not impair the flavour of the dried blanched sugar beet product. Moreover, it is found that the sugar beet product tends to reduce the sensitivity of the process to cooker extruder variables such as machine torque, and hence gives greater product uniformity.

B. Preparation of a Wafer

Wafer batters and wafers are prepared according to the following formulations

| | Control | | Test Recipe | |
|---|---|---|---|---|
| | Batter % w/w | Wafer %w/w | Batter %w/w | Wafer %w/w |
| Wheat Flour | 33.37 | 68.92 | 31.03 | 68.92 |
| Ground nut oil | 00.77 | 01.91 | 00.74 | 01.91 |
| Caster sugar | 11.12 | 26.72 | ----- | ----- |
| Sugar Beet composition | ----- | ----- | 10.34 | 26.72 |
| Lecithin | 00.32 | 00.76 | 00.30 | 00.76 |
| Salt | 00.08 | 00.19 | 00.07 | 00.19 |
| Water | 54.31 | 01.50 | 57.52 | 01.50 |
| | 100.00 | 100.00 | 100.00 | 100.00 |

The sugar beet composition is the material obtained by the process of Example 1. The water content of the batter in the test recipe is slightly greater than in the control to allow for the water binding properties of the sugar beet composition. The batter is cooked between a top plate at 140°C and a bottom plate at 135°C. The baking time is 90 seconds for the control, 105 seconds for the test recipe. The wafer containing the sugar beet composition has a more crisp and less fragile texture and a flavour complementary to the sugar based products that combines satisfactory sweetness with malty flavour notes. This shows that the sugar beet composition of the present invention can be substituted directly for sugar (sucrose) in the manufacture of wafers.

C. Preparation of Caramel

A toffee caramel containing the sugar beet composition of Example 1 is prepared, together with a control sample of conventional caramel. The formulations are as follows:-

|  | Control % | Test Recipe % |
|---|---|---|
| Glucose Syrup (63 DE) | 33.2 | 33.2 |
| Sweetened Condensed Full Cream Milk | 25.2 | 25.2 |
| Granulated sugar | 18.9 | 9.4 |
| Sugar Beet Composition | ---- | 9.5 |
| Hardened Palm Kernel Oil | 12.1 | 12.1 |
| Lecithin | 0.5 | 0.5 |
| Water | 10.1 | 10.1 |
|  | 100.0 | 100.0 |

The caramel is prepared by mixing the ingredients, followed by cooking in a steam jacketed boiling vessel until the product reaches the desired solids content and hardness. It is then cooled and formed into confectionery products.

It is found by sensory analysis that a test caramel having a water content of 17% w/w has comparable hardness to a control caramel containing 13% w/w water. Thus, the water binding properties of the sugar beet composition provide a 4% increase in yield, and thus a saving on ingredients over the control recipe. Furthermore, the water binding attributes of the sugar beet composition act as a viscosity controller, significantly reducing "cold flow" of the product (a common problem with toffee caramel). Partial substitution of the sugar by the sugar beet composition gives the test caramel a distinctive nutty flavour. Indeed, use of a selected grade of the sugar beet product having a larger grist size gives a flavour and texture resembling that of added coconut. The perceived sweetness of the test caramel is greater than that of the control caramel, which suggests a synergistic effect between the sugar beet composition and the glucose syrup that acts to enhance perceived sweetness. The sugar beet composition may alternatively, or additionally, be used as a substitute for part of the glucose syrup.

D. Preparation of Shortbread Biscuits

Two shortbread biscuit mix test recipes containing the sugar beet composition of Example 1 are prepared according to the following formulations, together with a comparative control formulation:

| Ingredients | Control % | Mix 1 % | Mix 2 % |
|---|---|---|---|
| Wheat Flour | 48.2 | 48.2 | 48.2 |
| Butter | 33.3 | 33.3 | 33.3 |
| Caster Sugar | 18.5 | 9.2 | 11.1 |
| Sugar Beet Composition | 0.0 | 9.3 | 7.4 |
| **Totals** | 100.0 | 100.0 | 100.0 |

The ingredients are placed in a mixing bowl and mixed using a dough hook for two minutes at low speed followed by three minutes at medium speed. The resulting dough is rolled to 6 mm thickness and cut into 3 cm x 7 cm pieces. These are baked for 25 minutes at 150°C.

The use of the sugar beet composition in the shortbread imparts a light texture, improved crispness and structure control permitting even distribution of residual moisture. A range of products can be obtained by varying the inclusion level. The inclusion level also controls the degree of flow during baking, since higher levels of the sugar beet composition result in less flow. The water binding properties of the sugar beet ingredient may also permit an increased yield of biscuits for a given quantity of ingredients. At high inclusion levels, the sugar beet composition imparts a wholemeal digestive character to the biscuits.

The above embodiments have been described for the purpose of illustration only. Many other processes, products and uses within the scope of the accompanying claims will be apparent to the skilled reader.

**Claims**

1. A process to prepare a palatable composition comprising sugar beet material and consisting essentially of sugar and non-starch polysaccharides, said process comprising the steps of:

   (a) chopping raw sugar beet to produce raw sugar beet pieces; immediately followed by
   (b) blanching the raw sugar beet pieces in steam or hot water at a temperature of at least 87°C, followed by
   (c) drying the blanched sugar beet pieces in hot air.

2. A process according to claim 1, wherein the dried blanched sugar beet pieces contain at least 40% w/w of sugar.

3. A process according to claim 1 or 2, wherein the dried blanched sugar beet pieces contain at least 50% w/w of sugar.

4. A process according to claim 1, 2 or 3, wherein the dried blanched sugar beet pieces contain at least 60% w/w of sugar.

5. A process according to any preceding claim, wherein the raw sugar beet is chopped to produce cosettes.

6. A process according to any of claims 1 to 4, wherein the step of chopping the raw sugar beet comprises dicing the raw sugar beet into diced raw sugar beet pieces.

7. A process according to claim 6, wherein at least 75% of the diced raw sugar beet pieces have a median diameter in the range 2mm-20mm.

8. A process according to claim 6 or 7, wherein at least 75% of the diced raw sugar beet pieces have a median diameter in the range 3mm-10mm.

9. A process according to any preceding claim, wherein the blanching step is carried out using steam in a steam blancher.

10. A process according to any preceding claim, wherein there is no intermediate pressing step between steps (b) and (c).

11. A process according to any preceding claim wherein the drying step is carried out on a belt dryer using hot air.

12. A process according to any preceding claim wherein the blanched sugar beet pieces are dried using hot air at a temperature of 110-125°C.

13. A process according to any preceding claim wherein the drying conditions in step (c) are selected to develop a uniform tan colour throughout each of the dried blanched sugar beet pieces.

14. A process according to any preceding claim further comprising the steps of milling the dried blanched sugar beet pieces obtained in step (c).

15. A palatable sugar beet material obtainable by a process according to any preceding claim.

16. A palatable sugar beet material consisting essentially of sugar and non-starch polysaccharides, said material comprising from 40% to 80% w/w sugar and having a malty taste.

17. A palatable sugar beet material according to claim 16, wherein the material comprises from 60% to 75% w/w of sugar.

18. A palatable sugar beet material according to claim 16 or 17 having a sensory profile substantially the same as a product of the process according to any of claims 1 to 14.

19. Use of a palatable sugar beet material according to any of claims 15 to 18 as a malt flavouring agent in the preparation of foodstuffs or beverages.

20. Use of a palatable sugar beet material according to any of claims 15 to 18 as a substitute or adjunct for sucrose or another bulk sweetener in the preparation of foodstuffs or beverages.

21. Use according to claim 19 or 20, wherein the palatable sugar beet material is used in the preparation of a foodstuff also containing glucose syrup.

22. Use of a palatable sugar beet material according to any of claims 15 to 18 as a water binding agent in the preparation of foodstuffs.

23. Use according to any of claims 19 to 22, wherein the foodstuff is a breakfast cereal.

24. A process for the preparation of a foodstuff comprising the step of cooker extrusion of an edible composition comprising a palatable sugar beet material according to any of claims 15 to 18.

**Patentansprüche**

1. Verfahren zur Herstellung einer wohlschmeckenden Zusammensetzung, die Zuckerrübenmaterial aufweist, und im wesentlichen aus Zucker und Polysacchariden, außer Stärke, besteht, wobei das Verfahren die Schritte aufweist, bei denen:

   (a) die rohen Zuckerrüben zerhackt werden, um rohe Zuckerrübenstücke herzustellen; und unmittelbar danach
   (b) die rohen Zuckerrübenstücke in Dampf, oder heißem Wasser bei einer Temperatur von mindestens 87°C blanchiert werden, und danach
   (c) die blanchierten Zuckerrübenstücke in heißer Luft getrocknet werden.

2. Verfahren gemäß Anspruch 1, wobei die getrockneten, blanchierten Zuckerrübenstücke mindestens 40 Gewichtsprozent Zucker enthalten.

3. Verfahren gemäß Anspruch 1 oder 2, wobei die getrockneten, blanchierten Zuckerrübenstücke mindestens 50 Gewichtsprozent Zucker enthalten.

4. Verfahren gemäß Anspruch 1, 2 oder 3, wobei die getrockneten, blanchierten Zuckerrübenstücke mindestens 60 Gewichtsprozent Zucker enthalten.

5. Verfahren gemäß irgendeinem vorhergehenden Anspruch, wobei die rohen Zuckerrüben zerhackt werden, um Zuckerrübenschnitzel herzustellen.

6. Verfahren gemäß irgendeinem der Ansprüche 1 bis 4, wobei bei dem Schritt, bei dem die rohen Zuckerrüben zerhackt werden, die rohen Zuckerrüben in würfelförmige, rohe Zuckerrübenstücke zerschnitten werden.

7. Verfahren gemäß Anspruch 6, wobei mindestens 75% der würfelförmigen, rohen Zuckerrübenstücke einen mittleren Durchmesser in dem Bereich von 2-20 mm haben.

8. Verfahren gemäß Anspruch 6 oder 7, wobei mindestens 75% der würfelförmigen, rohen Zuckerrübenstücke einen mittleren Durchmesser in dem Bereich von 3-10 mm haben.

9. Verfahren gemäß irgendeinem vorhergehenden Anspruch, wobei der Blanchierschritt unter Verwendung von Dampf in einem Dampfblanchierapparat ausgeführt wird.

10. Verfahren gemäß irgendeinem vorhergehenden Anspruch, wobei zwischen den Schritten (b) und (c) kein Preßschritt ausgeführt wird.

**11.** Verfahren gemäß irgendeinem vorhergehenden Anspruch, wobei der Trockenschritt auf einem Bandtrockner unter Verwendung von heißer Luft ausgeführt wird.

**12.** Verfahren gemäß irgendeinem vorhergehenden Anspruch, wobei die blanchierten Zuckerrübenstücke unter Verwendung von heißer Luft bei einer Temperatur von 110-125°C getrocknet werden.

**13.** Verfahren gemäß irgendeinem vorhergehenden Anspruch, wobei die Trockenbedingungen bei dem Schritt (c) so ausgewählt werden, daß sich eine gleichmäßige gelbbraune Farbe bei jedem der getrockneten, blanchierten Zukkerrübenstücke entwickelt.

**14.** Verfahren gemäß irgendeinem vorhergehenden Anspruch, der weiterhin die Schritte aufweist, bei denen die bei dem Schritt (c) erhaltenen, getrockneten, blanchierten Zuckerrübenstücke gemahlen werden.

**15.** Wohlschmeckendes Zuckerrübenmaterial, das nach einem Prozeß gemäß irgendeinem vorhergehenden Anspruch herstellbar ist.

**16.** Wohlschmeckendes Zuckerrübenmaterial, das im wesentlichen aus Zucker und Polysacchariden, außer Stärke, besteht, wobei das Material zwischen 40 und 80 Gewichtsprozent Zucker aufweist und einen malzigen Geschmack hat.

**17.** Wohlschmeckendes Zuckerrübenmaterial gemäß Anspruch 16, wobei das Material zwischen 60 und 75 Gewichtsprozent Zucker aufweist.

**18.** Wohlschmeckendes Zuckerrübenmaterial gemäß Anspruch 16 oder 17, das im wesentlichen das gleiche sensorische Profil wie ein Produkt des Verfahrens gemäß irgendeinem der Ansprüche 1 bis 14 hat.

**19.** Verwendung eines wohlschmeckenden Zuckerrübenmaterials gemäß irgendeinem der Ansprüche 15 bis 18 als ein Malz-Geschmackstoff bei der Herstellung von Nahrungsmitteln oder Getränken.

**20.** Verwendung eines wohlschmeckenden Zuckerrübenmaterials gemäß irgendeinem der Ansprüche 15 bis 18 als Ersatzstoff oder Zusatz für Sucrose oder einen anderen losen Süßstoff bei der Herstellung von Nahrungsmitteln oder Getränken.

**21.** Verwendung gemäß Anspruch 19 oder 20, wobei das wohlschmeckende Zuckerrübenmaterial bei der Herstellung eines Nahrungsmittels verwendet wird, das auch Glucosesirup enthält.

**22.** Verwendung eines wohlschmeckenden Zuckerrübenmaterials gemäß irgendeinem der Ansprüche 15 bis 18 als ein Wasserbindemittel bei der Herstellung von Nahrungsmitteln.

**23.** Verwendung gemäß irgendeinem der Ansprüche 19 bis 22, wobei das Nahrungsmittel Frühstücks-Getreideflocken sind.

**24.** Verfahren zur Herstellung eines Nahrungsmittels, der den Schritt der Kocherextrusion einer eßbaren Zusammensetzung aufweist, die ein wohlschmeckendes Zuckerrübenmaterial gemäß irgendeinem der Ansprüche 15 bis 18 aufweist.

## Revendications

**1.** Procédé pour préparer une composition au goût agréable comprenant une substance de betterave sucrière et constituée essentiellement de sucre et de polysaccharides autres que l'amidon, ledit procédé comportant les étapes consistant à :

> (a) hacher la betterave sucrière brute pour produire des morceaux de betterave sucrière brute; immédiatement après
> (b) faire blanchir les morceaux de betterave sucrière brute dans de la vapeur ou de l'eau chaude à une température d'au moins 87°C, puis
> (c) faire sécher dans de l'air chaud les morceaux de betterave sucrière blanchis.

2. Procédé selon la revendication 1, dans lequel les morceaux de betterave sucrière blanchis et séchés contiennent au moins 40% en poids de sucre.

3. Procédé selon la revendication 1 ou 2, dans lequel les morceaux de betterave sucrière blanchis et séchés contiennent au moins 50% en poids de sucre.

4. Procédé selon la revendication 1, 2 ou 3, dans lequel les morceaux de betterave sucrière blanchis et séchés contiennent au moins 60% en poids de sucre.

5. Procédé selon l'une quelconque des revendications précédentes, dans lequel la betterave sucrière brute est hachée pour produire des cossettes.

6. Procédé selon l'une quelconque des revendications 1 à 4, dans lequel l'étape de hachage de la betterave sucrière brute comprend le découpage de la betterave sucrière brute en morceaux de betterave sucrière brute en forme de dés.

7. Procédé selon la revendication 6, dans lequel au moins 75% des morceaux de betterave sucrière brute coupés en dés ont un diamètre moyen compris entre 2 mm et 20 mm.

8. Procédé selon la revendication 6 ou 7, dans lequel au moins 75% des morceaux de betterave sucrière brute coupés en dés ont un diamètre moyen compris entre 3 mm et 10 mm.

9. Procédé selon l'une quelconque des revendications précédentes, dans lequel l'étape de blanchiment s'effectue en utilisant de la vapeur dans un blanchisseur à vapeur.

10. Procédé selon l'une quelconque des revendications précédentes, dans lequel il n'y a aucune étape de pressage intermédiaire entre les étapes (b) et (c).

11. Procédé selon l'une quelconque des revendications précédentes, dans lequel l'étape de séchage s'effectue sur un séchoir à bande à l'aide d'air chaud.

12. Procédé selon l'une quelconque des revendications précédentes, dans lequel les morceaux de betterave sucrière blanchis sont séchés à l'aide d'air chaud à une température de 110 à 125°C.

13. Procédé selon l'une quelconque des revendications précédentes, dans lequel les conditions de séchage dans l'étape (c) sont choisis de façon qu'une couleur brun jaune uniforme se développe au travers de chacun des morceaux de betterave sucrière blanchis et séchés.

14. Procédé selon l'une quelconque des revendications précédentes comportant en outre les étapes de broyage des morceaux de betterave sucrière blanchis et séchés obtenus dans l'étape (c).

15. Substance de betterave sucrière au goût agréable pouvant être obtenue par un procédé selon l'une quelconque des revendications précédentes.

16. Substance de betterave sucrière au goût agréable constituée essentiellement de sucre et de polysaccharides autres que l'amidon, ladite substance comprenant de 40% à 80% en poids de sucre et ayant un goût de malt.

17. Substance de betterave sucrière au goût agréable selon la revendication 16, où la substance comprend de 60% à 75% en poids de sucre.

18. Substance de betterave sucrière au goût agréable selon la revendication 16 ou 17 ayant un profil sensoriel sensiblement identique à un produit du procédé selon l'une quelconque des revendications 1 à 14.

19. Utilisation d'une substance de betterave sucrière au goût agréable selon l'une quelconque des revendications 15 à 18, en tant qu'aromatisant au malt dans la préparation d'aliments ou de boissons.

20. Utilisation d'une substance de betterave sucrière au goût agréable selon l'une quelconque des revendications 15 à 18, comme substitut ou succédané pour le saccharose ou un autre édulcorant en vrac dans la préparation d'aliments ou de boissons.

**21.** Utilisation selon la revendication 19 ou 20, où la substance de betterave sucrière au goût agréable est utilisée dans la préparation d'un aliment contenant aussi du sirop de glucose.

**22.** Utilisation d'une substance de betterave sucrière au goût agréable selon l'une quelconque des revendications 15 à 18 comme agent de liaison de l'eau dans la préparation d'aliments.

**23.** Utilisation selon l'une quelconque des revendications 19 à 22, où l'aiment consiste en des céréales de petit déjeuner.

**24.** Procédé pour la préparation d'un aliment comportant l'étape d'extrusion dans un cuiseur-extrudeur d'une composition consommable comprenant une substance de betterave sucrière au goût agréable selon l'une quelconque des revendications 15 à 18.

FIG.1

```
┌─────────────────────────────┐
│       Beet ex farm          │
│  (topped, ≙ 7 % soil)       │
└─────────────────────────────┘
               │
               ▼
┌─────────────────────────────┐
│          Prewash            │
└─────────────────────────────┘
               │
               ▼
┌─────────────────────────────┐
│          Washing            │
└─────────────────────────────┘
               │
               ▼
┌─────────────────────────────┐
│          Dicing             │
│        (3 - 10 mm)          │
└─────────────────────────────┘
               │
               ▼
┌─────────────────────────────┐
│       Steam blanching       │
└─────────────────────────────┘
               │
               ▼
┌─────────────────────────────┐
│        Band drying          │
└─────────────────────────────┘
               │
               ▼
┌─────────────────────────────┐
│          Cooling            │
└─────────────────────────────┘
               │
               ▼
┌─────────────────────────────┐
│          Milling            │
└─────────────────────────────┘
               │
               ▼
┌─────────────────────────────┐
│          Oiling             │
└─────────────────────────────┘
               │
               ▼
┌─────────────────────────────┐
│          Bagging            │
└─────────────────────────────┘
```

FIG.2